(19) Europäisches Patentamt / European Patent Office / Office européen des brevets

(11) **EP 4 765 726 A1**

(12) **DEMANDE DE BREVET EUROPEEN**

(43) Date de publication:
**24.06.2026 Bulletin 2026/26**

(21) Numéro de dépôt: **25225929.6**

(22) Date de dépôt: **19.12.2025**

(51) Classification Internationale des Brevets (IPC):
**H04L 9/08** (2006.01)

(52) Classification Coopérative des Brevets (CPC):
**H04L 9/0836;** H04L 2209/601

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **23.12.2024 FR 2415112**

(71) Demandeur: **THALES**
**92190 Meudon (FR)**

(72) Inventeurs:
• **GARRIDO, Eric**
**92622 GENNEVILLIERS CEDEX (FR)**
• **ABELARD, Simon**
**92622 GENNEVILLIERS CEDEX (FR)**
• **DUPIN, Aurélien**
**92622 GENNEVILLIERS CEDEX (FR)**

(74) Mandataire: **Lavoix**
**2, place d'Estienne d'Orves**
**75441 Paris Cedex 09 (FR)**

(54) **MÉTHODE DE DIFFUSION À ACCÈS CONTRÔLÉ PAR RECOUVREMENT DE SOUS-ENSEMBLES D'UTILISATEURS ET MÉTHODE DE RÉCEPTION ASSOCIÉE**

(57) La présente invention concerne une méthode de diffusion de données à accès contrôlé par recouvrement de sous-ensembles d'utilisateurs, lesdits sous-ensembles appartenant à une famille préétablie ($F$) de $N > 1$ sous-ensembles indexés selon une relation d'ordre, chaque sous-ensemble ($S_i$) de ladite famille étant associée à une clé de chiffrement ($SK_i$), dans laquelle un centre de diffusion de données détermine (410) les $k \le N$ sous-ensembles ($S_{i_1}$, $S_{i_2}$, $\cdots$, $S_{i_k}$) de ladite famille permettant un recouvrement ($S_{i_1} \cup S_{i_2} \cdots \cup S_{i_k}$) des utilisateurs autorisés à accéder à ces données et de ceux-ci seulement, cette méthode utilisant un entête de message avec un codage économe du k-uplet des indices ($i_1, i_2,.., i_k$) des $k$ sous-ensembles au moyen d'un mot de code ($C(i_1, i_2,.., i_k)$) de $\log_2 \binom{N}{k}$ bits. La présente invention concerne également une méthode de réception d'un message diffusé ($M$) utilisant la méthode de diffusion de données précitée.

détermination d'un recouvrement des utilisateurs autorisés à l'aide de de $k$ sous-ensembles parmi $N$: $S_{i_1} \cup S_{i_2} \cdots \cup S_{i_k}$ — 410

codage du k-uplet $i_1, i_2, \ldots, i_k$ par un mot de code $C(i_1, i_2, \ldots, i_k)$ de $\log_2 \binom{N}{k}$ bits — 420

génération de la clé de session $K(t)$ chiffrement avec $SK_{i_1}$, $SK_{i_2}$, ..., $SK_{i_k}$ — 430

construction de l'entête de message $\left[(i_1, i_2, \ldots, i_k), E\left(SK_{i_1}, K(t)\right), E\left(SK_{i_2}, K(t)\right), \ldots, E\left(SK_{i_k}, K(t),\right)\right]$ — 440

chiffrement d'un bloc de données avec la clé de session $K(t)$ — 450

formation du message $M$ par concaténation de l'entête et de la charge utile — 460

diffusion à l'ensemble des utilisateurs — 470

FIG.4

EP 4 765 726 A1

**Description**

**DOMAINE TECHNIQUE**

La présente invention concerne de manière générale la diffusion chiffrée de données, encore quelquefois dénommée chiffrement de diffusion ou BE (*Broadcast Encryption*). Elle trouve notamment application dans les systèmes où l'émetteur en charge de la diffusion dispose d'une faible bande passante, en particulier dans le cadre de la radionavigation par satellites.

**ÉTAT DE LA TECHNIQUE ANTERIEURE**

Les services de diffusion à accès contrôlé sont largement répandus dans le domaine de l'audiovisuel (Pay-TV), du streaming audio, de la distribution de contenus protégés pas des droits d'auteur. Ils permettent aux d'utilisateurs abonnés à un tel service de pouvoir accéder à des données après les avoir déchiffrées. La diffusion à accès contrôlé n'est cependant pas limitée à ce type d'application. Il a été par exemple envisagé plus récemment de permettre à des utilisateurs privilégiés (ou abonnés) de services de géolocalisation d'accéder à des signaux satellitaires chiffrés pour obtenir une meilleure précision de positionnement.

De manière générale, une méthode de diffusion à accès contrôlé a pour objet de diffuser des données chiffrées pouvant être déchiffrées au moyen de clés cryptographiques par un ensemble d'utilisateurs autorisés et seulement à ceux-là : les utilisateurs ne disposant pas des droits ou ceux dont les droits ont été révoqués ne doivent pas pouvoir obtenir lesdites clés cryptographiques.

De nombreuses méthodes de diffusion à accès contrôlé ont été proposées dans l'état de la technique. Les plus performantes utilisent un schéma cryptographique de diffusion ou BES (*Broadcast Encryption Scheme*) basé sur un recouvrement par sous-ensembles (*Subset Cover*) d'utilisateurs, rappelé ci-après.

On fait l'hypothèse qu'il existe un ensemble $U$ d'utilisateurs (autorisés ou non) et que l'on dispose d'une famille préétablie de $N$ sous-ensembles de ces utilisateurs, non-nécessairement disjoints.

Le centre de diffusion en charge de la diffusion à accès contrôlé, dénommé ci-après plus brièvement centre de diffusion, associe à chacun des sous-ensembles, soit $S_i$, $i = 1,.., N$ une clé de chiffrement $SK_i$. Un utilisateur n'a accès qu'aux clés de chiffrement des sous-ensembles auxquels il appartient. Ces clés peuvent avoir été obtenues par l'utilisateur dans une phase initiale à partir d'une information préalable qui lui est fournie sous forme chiffrée.

Lors d'une session de diffusion des données, le centre de diffusion génère une clé de session, $K(t)$, typiquement une clé symétrique d'un algorithme de chiffrement par flot, $t$ étant l'indice temporel de la session. Le centre de diffusion détermine une couverture des utilisateurs autorisés (par exemple des abonnés du service) à l'aide des sous-ensembles $S_i$, c'est à dire un k-uplet d'indices $i_1, i_2,..,i_k \in \{0, ... , N - 1\}$ tel que :

$$U \setminus R = S_{i_1} \cup S_{i_2} \cdots \cup S_{i_k} \tag{1}$$

où R est l'ensemble des utilisateurs non autorisés (pirates ou révoqués). Autrement dit :

$$\forall u \in U \setminus R, \ u \in S_{i_1} \cup S_{i_2} \cdots \cup S_{i_k} \tag{2-1}$$

$$\forall u \in R, \ \ u \notin S_{i_1} \cup S_{i_2} \cdots \cup S_{i_k} \tag{2-2}$$

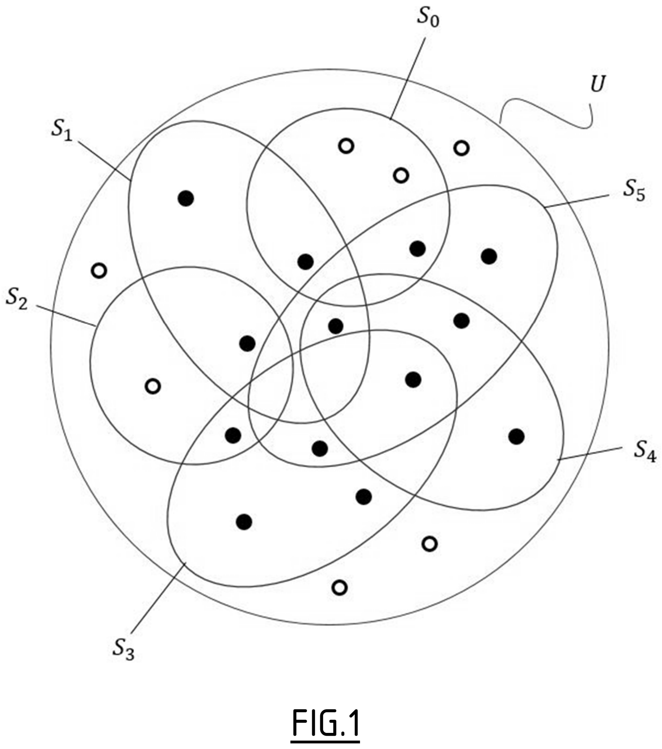

La figure 1 représente de manière schématique un exemple de recouvrement par sous-ensemble des utilisateurs autorisés.

On a indiqué par $U$ l'ensemble des utilisateurs et par $S_1$, $S_3$, $S_4$, $S_5$, les sous-ensembles de $U$ assurant la couverture des utilisateurs autorisés. Ces derniers ont été représentés par des disques alors que les utilisateurs non-autorisés ont été représentés par des cercles. On remarque dans cet exemple que les sous-ensembles de la couverture ne sont pas nécessairement disjoints et qu'un utilisateur autorisé peut appartenir à plusieurs de ces sous-ensembles. On notera que les sous-ensembles $S_0$ et $S_2$ ne sont pas retenus par le centre de diffusion dans la mesure où ils contiennent des utilisateurs non utilisés.

Revenant au cas général, le centre de diffusion diffuse à l'ensemble des utilisateurs un message dont l'entête contient les indices des sous-ensembles assurant la couverture précitée, soit $\{i_1, i_2,..,i_k\}$, ainsi que clé de session chiffrée par les clés de chiffrement associés à ces sous-ensembles. La charge utile du message contient quant à elle des données de la session, chiffrées au moyen de la clé de session $K(t)$. En définitive, le message M diffusé se présente sous la forme :

$$\left[\{i_1, i_2, \ldots, i_k\}, \mathrm{E}\left(SK_{i_1}, K(t)\right), \mathrm{E}\left(SK_{i_2}, K(t)\right), \ldots, \mathrm{E}\left(SK_{i_k}, K(t),\right)\right], F(K(t), D)$$

$$(2)$$

où $\mathrm{E}(SK_i,.)$ est une fonction de chiffrement, par exemple une fonction de chiffrement par bloc, au moyen de la clé $SK_i$, $F(K(t),.)$ est une fonction de chiffrement par flot au moyen de la clé de session $K(t)$ et D représente les données de la session.

Une des méthodes de diffusion à contrôle d'accès les plus populaires est la méthode dénommée NNL, décrite dans l'article de D. Naor et al. intitulée « Revocation and tracing schemes for stateless receivers » publiée dans CRYPTO 2001, LNCS 2139, pp. 41-62, 2001, Springer Verlag et dans la demande internationale WO-A-02/060116.

La méthode NNL existe sous deux versions, toutes deux décrites dans les documents précités, la version dite à sous-arbres complets ou NNL-CS (*Complete Subtree*) et la version à différence de sous-ensembles ou NNL-SD (*Subset Difference*), ces deux versions faisant appel à un recouvrement par sous-ensembles comme décrit plus haut.

Les deux méthodes font appel à une représentation arborescente de l'ensemble des utilisateurs mais diffèrent par le type de sous-ensembles utilisés pour le recouvrement des utilisateurs autorisés.

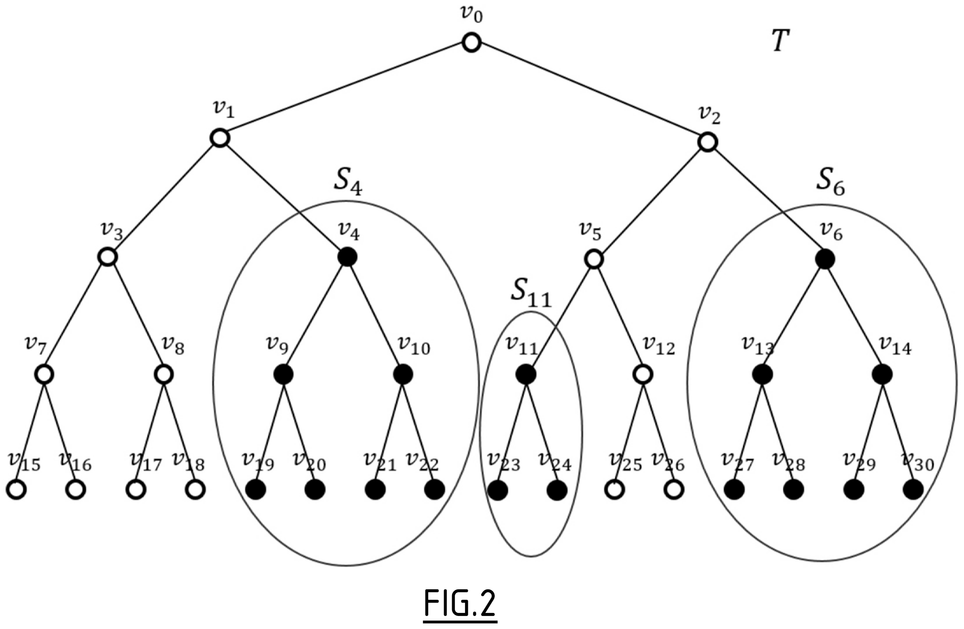

La figure 2 illustre schématiquement le fonctionnement de la méthode de diffusion à accès contrôlé de type NNL-CS.

Les utilisateurs (autorisés ou non) voire des groupes d'utilisateurs (chaque groupe étant alors considéré comme autorisé ou non) sont respectivement associés aux feuilles d'un arbre binaire, $T$, c'est-à-dire d'un arbre dont chaque nœud a 2 fils (un nœud interne ou une feuille). En revanche, une feuille de l'arbre peut être associée à aucun utilisateur. Cet arbre binaire est parfait dans la mesure où toutes ces feuilles sont situées à une égale distance de la racine. Pour des raisons de simplification de la description on supposera dans la suite que chaque feuille est associée à au plus un utilisateur.

Si l'on note $n$ la hauteur de l'arbre à partir de la racine, on dispose de $2^n$ feuilles et l'on peut donc discriminer au plus $2^n$ utilisateurs. La famille préétablie de sous-ensembles $S_i$ est constituée par les sous-arbres ayant pour racine un nœud quelconque de l'arbre. Le nombre de ces sous-ensembles est donc le nombre total des nœuds de l'arbre (incluant ses feuilles, soit $N = 2^{n+1} - 1$. Ainsi, les sous-ensembles permettant un recouvrement peuvent être notés $S_i = ST(v_i)$ où $v_i$ est un nœud de l'arbre et $ST(v_i)$ désigne un sous-arbre ayant pour racine ce nœud. A chaque sous-ensemble $S_i$, ou de manière équivalente à chaque nœud, est associée une clé de chiffrement. Ces clés de chiffrement peuvent être générées de manière purement aléatoire et indépendante les unes des autres. Alternativement, la clé de chiffrement d'un nœud de niveau $\ell$ peut être déduite de son nœud parent à l'aide d'une fonction de hachage cryptographique.

Les nœuds de l'arbre $T$ sont numérotés en partant de la racine et en progressant de niveau en niveau, chaque niveau étant successivement balayé, les nœuds d'un même niveau étant numérotés successivement. Le nœud $v_O$ correspondant à la racine et donc $S_0 = T$. Dans la figure 2, on a illustré un arbre $T$ à $n = 4$ niveaux, les 16 feuilles étant numérotées $v_{15}$ à $v_{30}$, les utilisateurs autorisés (et donc les feuilles associées) ayant été représentés par des disques, ceux non-autorisés par des cercles. Dans l'exemple illustré, les utilisateurs autorisés correspondent à $v_{19}$ - $v_{24}$, $v_{27}$ - $v_{30}$ et le recouvrement le plus économe est assuré par les sous-ensembles $S_4$, $S_{11}$ et $S_6$. On remarque que ces sous-ensembles sont des sous-arbres dont les racines sont situées le plus bas dans l'arborescence et pour lesquels tous les feuilles sont associées à des utilisateurs autorisés. Il convient de noter que ce recouvrement n'est pas unique : par exemple les sous-ensembles $S_9$, $S_{10}$, $S_{11}$, $S_6$ ou $S_9$, $S_{10}$, $S_{11}$, $S_{13}$, $S_{14}$ l'assurent également même s'ils sont moins économes.

Dans le cas présent, le centre de diffusion transmettra à l'ensemble des utilisateurs un message dont l'entête contient les indices 4,11 et 6 ainsi que la clé de session chiffrée par les clés $SK_4$, $SK_{11}$ et $SK_6$.

Un utilisateur recevant le message détermine si la feuille à laquelle il est associé appartient au sous-arbre ayant pour racine $v_4$, $v_{11}$ ou $v_6$. Si c'est le cas, il utilise la clé correspondante $SK_4$, $SK_{11}$ ou $SK_6$ selon le sous-arbre auquel il appartient pour décoder la clé de session $K(t)$ et par suite les données D.

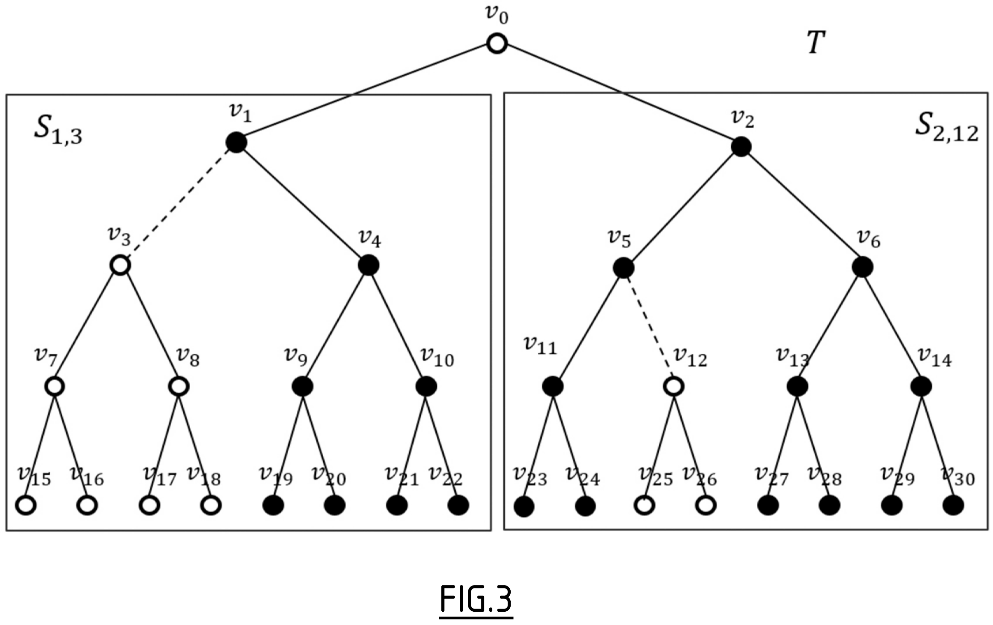

La figure 3 illustre schématiquement le fonctionnement de la méthode de diffusion à accès contrôlé de type NNL-SD.

La méthode de diffusion à accès contrôlé NNL-SD utilise la même structure arborescente mais un recouvrement par des sous-ensembles différents. Ces sous-ensembles sont ici des différences de sous-arbres, autrement du type $ST(v_i) \setminus ST(v_j)$ avec $v_j \in ST(v_i)$. Ils peuvent être par conséquent être identifiés par deux indices et notés $SD_{i,j} = ST(v_i) \setminus ST(v_j)$. De tels sous-ensembles sont au nombre de $N = 2^{n+1}(n - 1) + 2$. La méthode NNL-SD utilise également exceptionnellement $ST(v_0)$ (représentant l'ensemble des utilisateurs possibles) pour traiter le cas particulier où tous les utilisateurs sont autorisés.

Les utilisateurs autorisés correspondant à $v_{19}$ - $v_{24}$, $v_{27}$ - $v_{30}$, le recouvrement de $v_{19}$ - $v_{22}$ est assuré ici par $SD_{1,3} = ST(v_1) \setminus ST(v_3)$, celui de $v_{23}$ - $v_{24}$, $v_{27}$ - $v_{30}$ par $SD_{2,12} = ST(v_2) \setminus ST(v_{12})$. En conséquence, le centre de diffusion transmettra à l'ensemble des utilisateurs un message dont l'entête contient les couples d'indices (1,3) et (2,12) ainsi que la clé de session chiffrée au moyen des clés $SK_{1,3}$ et $SK_{1,12}$ respectivement associées aux sous-ensembles $SD_{1,3}$ et $SD_{2,12}$.

Un utilisateur recevant le message détermine si la feuille à laquelle il est associé appartient au sous-ensemble $SD_{1,3}$ ou $SD_{2,12}$. Si c'est le cas, il utilise la clé correspondante $SK_{1,3}$ ou $SK_{2,12}$, selon le sous-arbre auquel il appartient, pour déchiffrer la clé de session *K(t)* et par suite les données *D*.

L'avantage de la méthode de diffusion à accès contrôlé NNL-SD est de permettre un recouvrement avec moins de sous-ensembles que la méthode NNL-CS, ce pour un même nombre d'utilisateurs autorisés.

Les méthodes de diffusion à accès contrôlé NNL-CS et NNL-SD ont elles-mêmes donné lieu différentes variantes et sont généralement satisfaisantes pour les applications audiovisuelles. Toutefois dans les cas d'usage où la bande passante de l'émetteur est faible, la taille de l'entête peut être pénalisante, d'autant plus que l'on souhaitera avoir un recouvrement plus fin de l'ensemble des utilisateurs autorisés, notamment pour distinguer des zones géographiques, des niveaux de service ou autres.

Un but de la présente invention est par conséquent de proposer une méthode de diffusion à accès contrôlé par sous-ensembles d'utilisateurs pouvant être mise en œuvre dans des systèmes où la bande passante est faible par exemple dans le contexte de la géolocalisation, de la radionavigation ou encore de l'Internet des Objets (IoT).

A cet effet, l'invention a pour objet une méthode de diffusion de données à accès contrôlé par recouvrement de sous-ensembles d'utilisateurs, lesdits sous-ensembles appartenant à une famille préétablie (*F*) de $N > 1$ sous-ensembles indexés selon une relation d'ordre, chaque sous-ensemble ($S_i$) de ladite famille étant associée à une clé de chiffrement ($SK_i$), dans laquelle un centre de diffusion de données détermine les $k \leq N$ sous-ensembles ($S_{i_1}, S_{i_2}, \cdots, S_{i_k}$) de ladite famille permettant un recouvrement ($S_{i_1} \cup S_{i_2} \ldots \cup S_{i_k}$) des utilisateurs autorisés à accéder à ces données et de ceux-ci seulement, ladite méthode étant originale en ce que ledit centre de diffusion :

- code le *k*-uplet des indices ($i_1, i_2,..., i_k$) respectifs des *k* sous-ensembles au moyen d'un mot de code ($C(i_1, i_2,...,i_k)$) de

$$\log_2 \binom{N}{k} \text{ bits ;}$$

- chiffre une clé de session *(K(t))* au moyen de chacune des clés de chiffrement ($SK_{i_1}, SK_{i_2}, \cdots, SK_{i_k}$) associées à ces *k* sous-ensembles pour obtenir *k* versions chiffrées de la clé de session ;
- construit un entête de message en concaténant ledit mot de code et les *k* versions chiffrées de la clé de session ;
- chiffre un bloc de données (*D*) de ladite session au moyen de la clé de session pour obtenir une charge utile ;
- forme un message (M) en concaténant l'entête et la charge utile puis diffuse le message ainsi formé à l'ensemble des utilisateurs.

Le mot de code ($C(i_1,i_2,...,i_k)$) est avantageusement choisi comme l'expression binaire de la valeur entière $r = \sum_{p=1}^{k} \binom{i_p}{p}$, où $r \in \left[ 0, \binom{N}{k} \right[$ et $i_1, i_2,...,i_k$ sont les indices du k-uplet d'indices tels que $0 \leq i_1 < i_2 < ... < i_k \leq N - 1$.

La valeur entière r peut est calculée par récurrence à partir d'une séquence binaire ($w_{i_1,i_2,..,i_k}^{N}$) de longueur *N* et de poids de Hamming *k*, nulle partout sauf aux bits de positions $i_1, i_2,...,i_k$, ces derniers prenant la valeur « 1 », la valeur r étant le rang de la séquence binaire selon un ordre lexicographique.

Le chiffrement de la clé de session est réalisé par exemple au moyen d'un chiffrement par bloc et que le chiffrement du bloc de données est réalisé au moyen d'un chiffrement par flot.

Selon un premier mode de réalisation, la méthode de diffusion de données à accès contrôlé utilise un schéma arborescent pour représenter les sous-ensembles d'utilisateurs, les utilisateurs étant associés aux feuilles d'un arbre binaire, chaque sous-ensemble d'utilisateurs étant représenté par les feuilles d'un sous-arbre dont la racine appartient à cet arbre.

Selon un second mode de réalisation, la méthode de diffusion de données à accès contrôlé utilise un schéma arborescent pour représenter les sous-ensembles d'utilisateurs, les utilisateurs étant associés aux feuilles d'un arbre binaire, chaque sous-ensemble d'utilisateurs étant représenté par les feuilles d'un premier sous-arbre amputé d'un second sous-arbre dont la racine est un nœud du premier.

La présente invention concerne également une méthode de réception de messages diffusés par une telle méthode de diffusion à accès contrôlé. Cette méthode de réception est originale en ce qu'un récepteur d'un utilisateur extrait dudit message diffusé un entête contenant, d'une part, un mot de code (($C(i_1,i_2,...,i_k)$) de $\log_2 \binom{N}{k}$ bits, codant un k-uplet donnant les indices respectifs de *k* sous-ensembles ($S_{i_1}, S_{i_2}, \cdots, S_{i_k}$) recouvrant les utilisateurs autorisés à accéder aux données en clair du message, et seulement ceux-ci, parmi les *N* sous-ensembles possibles d'une famille (F) préétablie de sous-ensembles, et, d'autre part, *k* versions d'une clé de session chiffrée par chacune des clés de chiffrement ($SK_{i_1}, SK_{i_2}, \cdots, SK_{i_k}$) associées aux *k* sous-ensembles ;

- ledit récepteur décodant le mot de code à partir de la valeur entière ($r(w_{i_1,i_2,..,i_k}^{N}; k, N)$) correspondant au mot de code pour générer une séquence binaire ( $w_{i_1,i_2,..,i_k}^N = a_0 a_1 \ldots a_{N-1}$ ) de N bits, la position d'un bit égal à « 1 » dans la séquence donnant l'indice d'un sous-ensemble participant au recouvrement,

- le récepteur déterminant ensuite si l'utilisateur appartient à l'un des sous-ensembles participant au recouvrement et, dans la négative, arrêtant le déchiffrement et, dans l'affirmative,
- déchiffrant la clé de session au moyen de clé de chiffrement associée ($SK_{im}$) à un sous-ensemble auquel il appartient ($S_{im}$), puis
- déchiffrant la charge utile du message au moyen de la clé de session ainsi obtenue.

La génération de la séquence binaire ( $w_{i_1,i_2,..,i_k}^N = a_0 a_1 \ldots a_{N-1}$ ) est avantageusement effectuée de manière récursive à partir de la valeur entière ( $\left(r\left(w_{i_1,i_2,..,i_k}^N; k, N\right)\right.$ ) représentant le mot de code en recherchant l'intervalle $\left[\binom{L}{p}, \binom{L+1}{p}\right[$ dans lequel se trouve cette valeur entière, où L est un indice de position courante dans la séquence binaire et p est un compteur de positions de bit égal à « 1 » restant à trouver dans ladite séquence, et lorsque cette condition est réalisée, en déduisant qu'un bit égal à « 1 » est en position L dans la séquence binaire, et en retranchant alors à la valeur entière représentant le code, la valeur entière $\binom{i_p}{p}$ déjà décodée, l'indice de position L et le compteur p étant alors décrémentés de 1.

Un but subsidiaire de la présente invention est de proposer une telle méthode de réception qui puisse être implémentée au sein d'un récepteur possédant des ressources calculatoires réduites.

A cet effet, la génération de la séquence binaire ( $w_{i_1,i_2,..,i_k}^N = a_0 a_1 \ldots a_{N-1}$ ) est effectuée de manière récursive à partir de la valeur entière $u = r\left(w_{i_1,i_2,..,i_k}^N; k, N\right)$ représentant le mot de code, en recherchant l'intervalle [V * L(L - 1)(L - 2) ... (L - p + 1), V * (L + 1)L(L - 1) ... (L - p + 2)[ dans lequel se trouve l'entier U = V p!u où p est un compteur de positions de bit égal à « 1 » restant à trouver dans ladite séquence, la recherche sur L étant effectuée par dichotomie au sein d'un intervalle d'exploration [$N_{inf}$, $N_{sup}$[ dans la pième colonne du triangle de Pascal, et V est un entier sélectionné au fur et à mesure des itérations pour éviter l'emploi de la division, et vaut 1 au départ.

Avantageusement, lorsque la condition U ∈ [V * L(L - 1)(L - 2) ... (L - p + 1), V * (L + 1)L(L - 1) ... (L - p + 2)[ est réalisée, on met à jour l'entier U en lui soustrayant $\prod_{0 \leq j < p}(N_{inf} - j)$ et on met à jour V en le multipliant par p.

## BRÈVE DESCRIPTION DES DESSINS

L'invention apparaîtra plus clairement à la lecture de la description qui va suivre, donnée uniquement à titre d'exemple non limitatif, et faite en référence aux dessins dans lesquels :

[Fig. 1] La figure 1, déjà décrite, représente de manière schématique un recouvrement de sous-ensembles d'utilisateurs utilisé dans une méthode de diffusion à accès contrôlé connu de l'état de la technique ;
[Fig. 2] La figure 2, déjà décrite, illustre de manière schématique une première méthode de diffusion par recouvrement de sous-ensembles d'utilisateurs connue de l'état de la technique ;
[Fig. 3] La figure 3, déjà décrite, illustre de manière schématique une seconde méthode de diffusion par recouvrement de sous-ensembles d'utilisateurs connue de l'état de la technique.
[Fig. 4] La figure 4 représente de manière schématique une méthode de diffusion à accès contrôlé par recouvrement de sous-ensembles d'utilisateurs selon un mode général de réalisation de l'invention ;
[Fig. 5] La figure 5 illustre un exemple de codage d'un k-uplet d'indices de sous-ensembles de recouvrement de sous-ensembles d'utilisateurs pouvant être utilisé dans la méthode de diffusion à accès contrôlé de la Fig. 4 ;
[Fig. 6] La figure 6 représente de manière schématique une méthode de réception d'un message diffusé par la méthode de diffusion de la Fig. 4 ;
[Fig. 7] La figure 7 illustre un exemple de décodage de mot de code pouvant être utilisé dans la méthode de réception de la Fig. 6.

## EXPOSÉ DÉTAILLÉ DES MODES DE RÉALISATION

On considère dans la suite une méthode de diffusion à contrôle d'accès par recouvrement de sous-ensembles d'utilisateurs telle qu'exposée dans la partie introductive. Selon une telle méthode le centre de diffusion (*Broadcast*

*Center),* et plus précisément son émetteur, diffuse des messages de type indiqué par l'expression (2).

La taille du champ d'index présent dans l'entête de ces messages est de $k.log_2N$ où $N$ est le nombre de sous-ensembles de la famille préétablie et $k$ est le nombre (maximal) de sous-ensembles utilisés pour le recouvrement, avec $1 \leq k < N$. Par exemple, si l'on considère la méthode de contrôle d'accès NNL-SD avec un arbre de hauteur $n = 16$ et donc un nombre d'utilisateurs potentiels de, $2^{16} = 65536$, et une famille préétablie de sous-ensemble de cardinal $N \sim n2^{n+1} = 2^{21}$. Si le recouvrement utilise $k = 2^{12} = 4096$ sous-ensembles, la taille du champ d'index est de l'ordre de 86 kbs, ce qui peut être considérable au regard de la taille totale du message.

L'idée à la base de l'invention repose sur la constatation que le k-uplet d'indices ne dépend pas de l'ordre dans lequel ceux-ci sont présents dans le champ d'index puisque, pour le récepteur, seul importe si l'utilisateur appartient à l'un des sous-ensembles $S_{i_1}$, $S_{i_2}$, $\cdots$, $S_{i_k}$. Il en résulte que l'information transmise dans le champ d'index ne représente en définitive qu'une combinaison de $k$ sous-ensembles parmi $N$ et donc doit pouvoir être codée sur

$$log_2 \binom{N}{k} \sim klog_2(N) - log_2(k!)$$ en utilisant l'approximation $\binom{N}{k} \sim N^k/k!$ pour $N \gg k$. Ainsi dans l'exemple donné ci-dessus, l'information transmise devrait pouvoir être codée sur environ 42 kbs, ce qui représente un gain de plus de 50% sur la taille du champ d'index. De manière générale, on comprendra que le gain sur la taille du champ d'index sera de l'ordre de $log_2(k!)$, qui peut être important pour des valeurs élevées de $k$.

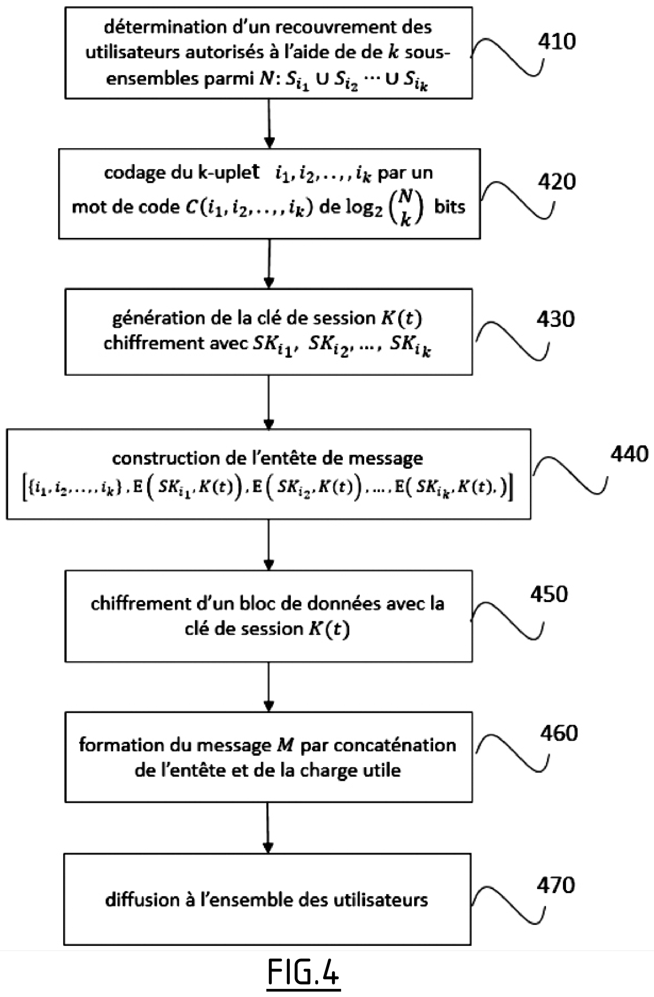

La figure 4 représente schématiquement une méthode de diffusion à accès contrôlé selon un mode général de réalisation de l'invention.

On suppose que dans une phase préalable chaque utilisateur u a obtenu les clés de chiffrement respectivement associées aux sous-ensembles auquel il appartient.

On suppose également que le centre de diffusion connait les utilisateurs ou les groupes d'utilisateurs qui sont autorisés et ceux qui ne le sont pas.

Le centre de diffusion dispose en outre d'une famille préétablie, *F,* de $N$ sous-ensembles d'utilisateurs permettant la couverture de tous les utilisateurs, chaque sous-ensemble étant identifié par un indice, les indices des $N$ sous-ensembles de la famille étant ordonnés selon une relation d'ordre.

A chaque nouvelle session, le centre de diffusion détermine en 410, un recouvrement des utilisateurs autorisés par au plus $k$ sous-ensembles parmi $N$, soit $S_{i_1} \cup S_{i_2} \cdots \cup S_{i_k}$.

Le centre de diffusion code en 420 le k-uplet des indices des sous-ensembles ainsi obtenus, $i_1, i_2,...,i_k$ en un mot binaire, $C(i_1, i_2,...,i_k)$, de taille $log_2 \binom{N}{k}$, dit mot de code, le codage, C, étant réalisé par exemple au moyen d'une fonction d'énumération des $k$ combinaisons de sous-ensembles parmi $N$ comme expliqué plus loin.

A l'étape 430, le centre de diffusion génère une clé de session, $K(t)$, et la code avec chacune des clés de chiffrement respectivement associées aux $k$ sous-ensembles formant le recouvrement, à savoir $S_{i_1}, S_{i_2}, ... S_{i_k}$ pour obtenir $k$ versions chiffrées de cette clé de session soit $E(SK_{i_1}, K(t))$, $E(SK_{i_2}, K(t))$, ..., $E(SK_{i_k}, K(t),)$, où $E(SK_{i}.)$ est une fonction de chiffrement au moyen de la clé $SK_i$. La fonction de chiffrement E pourra notamment être une fonction de chiffrement par bloc.

A l'étape 440, le centre de diffusion concatène le mot de code $C(i_1, i_2,...,i_k)$ obtenu à l'étape 420 avec les $k$ versions chiffrées de la clé de session obtenues à l'étape 430 pour former l'entête de message.

A l'étape 450, le centre de diffusion chiffre au moyen de la clé de session un bloc de données à diffuser pour obtenir un bloc de données chiffré, $F(K(t),D)$. La fonction de chiffrement F pourra notamment être une fonction de chiffrement par flot.

Enfin à l'étape 460, le centre de diffusion forme le message M à diffuser en concaténant l'entête obtenu à l'étape 440 avec le bloc de données chiffré à l'étape 450, puis le diffuse en 470 à l'ensemble des utilisateurs.

L'homme du métier comprendra sans peine que l'ordre de certaines des étapes décrites ci-dessus est indifférent. Ainsi, par exemple, l'étape 450 pourra être réalisée avant les étapes 420-440 ou encore l'étape 430 pourra être réalisée avant l'étape 420 sans sortir du cadre de la présente invention.

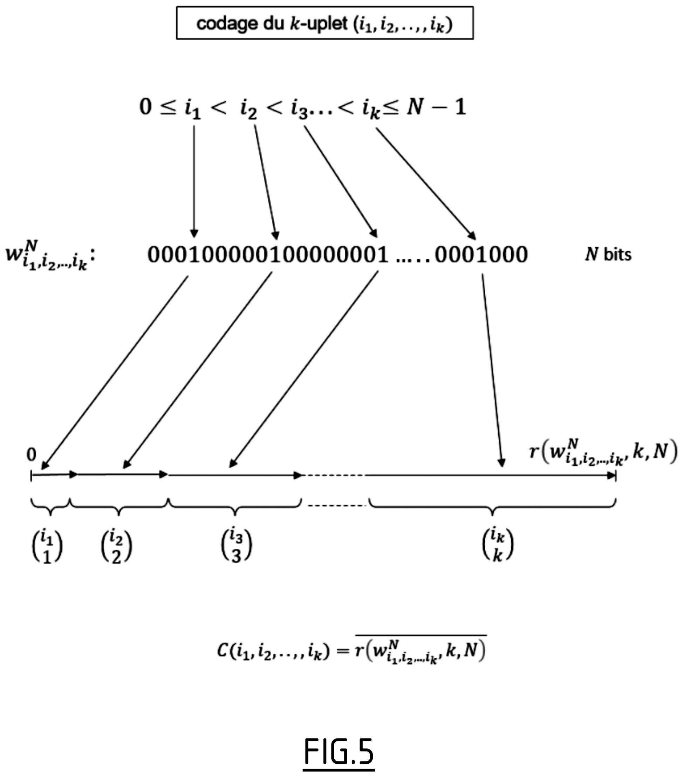

La figure 5 illustre un exemple de codage d'un k-uplet d'indices de sous-ensembles de recouvrement pouvant être utilisé dans la méthode de diffusion à accès contrôlé de la Fig. 4.

Etant donné que les indices des sous-ensembles de recouvrement sont ordonnés selon une relation d'ordre, on peut supposer sans perte de généralité que $0 \leq i_1 < i_2 < ... < i_k < N$. Le k-uplet d'indices $i_1,i_2,...,,i_k$ est codé à l'aide d'une fonction d'énumération, r, associant à toute séquence binaire $w^N_{i_1,i_2,...,i_k}$ de longueur $N$ et de poids de Hamming $k$ le mot de code $C(i_1,i_2,...,i_k)$ exprimant en binaire le rang de ce mot dans l'intervalle $\left[0, \binom{N}{k}\right[$ dans $\mathbb{N}$. Plus précisément :

$$C(i_1, i_2, \ldots, i_k) = \overline{r\left(w_{i_1,i_2,\ldots,i_k}^N; k, N\right)} = \overline{\sum_{p=1}^{k} \binom{i_p}{p}} \qquad (3)$$

où $\overline{x}$ désigne l'expression binaire de l'entier $x$.

La fonction r de l'espace des k-uplets d'entiers $0 \leq i_1 < i_2 < \ldots < i_k < N$ dans $\left[0, \binom{N}{k}\right[$ est bijective et strictement croissante si l'on ordonne l'espace de ces k-uplets au moyen d'une relation d'ordre lexicographique.

On a représenté sur la figure la séquence binaire $w_{i_1,i_2,\ldots,i_k}^N$ de taille N et de poids de Hamming égal à k, correspondant au k-uplet d'indices $i_1, i_2, \ldots, i_k$. La séquence binaire comporte un « 1 » dans les positions $i_1, i_2, \ldots, i_k$ (à compter du premier bit) et des « 0 » partout ailleurs, la présence d'un « 1 » en une position $i_p$ signifiant que le sous-ensemble $S_{i_p}$ fait partie du recouvrement, autrement dit que les utilisateurs (voire les groupes d'utilisateurs) faisant partie du sous-ensemble $S_{i_p}$ sont autorisés à accéder aux données de session en clair.

On a également fait figurer l'intervalle $\left[0, \binom{N}{k}\right[$ dans lequel les mots de code $C(i_1, i_2, \ldots, i_k)$ prennent leurs valeurs entières. Le plus petit k-uplet au sens de la relation d'ordre lexicographique est codé par la valeur 0 alors que le plus grand k-uplet, au sens de cette même relation d'ordre, est codé par la valeur $\binom{N}{k} - 1$. En d'autres termes, la séquence $w_{i_1,i_2,\ldots,i_k}^N$ correspondant au plus petit k-uplet, c'est-à-dire la séquence binaire de $N$ bits dont les $k$ premiers sont à « 1 » et les autres bits à « 0 » a pour image « 0 » par la fonction d'énumération R. De manière similaire, la séquence binaire $w_{i_1,i_2,\ldots,i_k}^N$ correspondant au plus grand $k$-uplet, c'est-à-dire la séquence binaire de $N$ bits dont les $k$ derniers sont à « 1 » et les autres bits à « 0 » a pour image « $\binom{N}{k} - 1$ » par la fonction d'énumération $R$.

Réciproquement, considérant l'intervalle $\left[0, \binom{N}{k}\right[$, les valeurs entières de code comprises entre $\binom{N-1}{k}$ et $\binom{N}{k} - 1$ correspondent aux séquences $w_{i_1,i_2,\ldots,i_k}^N$ dont le dernier bit est égal à « 1 » et les valeurs de code comprises entre 0 et $\binom{N-1}{k} - 1$ aux séquences $w_{i_1,i_2,\ldots,i_k}^N$ dont le dernier bit est égal à « 0 ». Si le dernier bit est égal à « 0 » cette remarque peut être répétée en amputant $w_{i_1,i_2,\ldots,i_k}^N$ du dernier bit. Les valeurs de code comprises entre $\binom{N-2}{k}$ et $\binom{N-1}{k} - 1$ correspondent aux séquences ainsi amputées dont le nouveau dernier bit est égal à « 1 » et les valeurs de code comprises entre 0 et $\binom{N-2}{k} - 1$ correspondent aux séquences ainsi amputées dont le nouveau dernier bit est égal à « 0 », et ainsi de suite. Après avoir amputé la séquence $w_{i_1,i_2,\ldots,i_k}^N$ de ses $N$ - $k$ derniers bits, autrement dit si les k premiers bits sont égaux à « 1 » la valeur du code est nulle.

Si l'on explicite la séquence binaire $w_{i_1,i_2,\ldots,i_k}^N$ associé au k-uplet $(i_1, i_2, \ldots, i_k)$, à savoir $w_{i_1,i_2,\ldots,i_k}^N = a_0 a_1 \ldots a_{N-1}$ où $a_{N-1}$ est le dernier bit et $a_0 + a_1 + \cdots + a_{N-1} = k$, le mot de code $C(i_1, i_2, \ldots, i_k)$ peut être calculé par récurrence comme suit, en distinguant à chaque itération le cas où le dernier bit est égal à « 0 » ou à « 1 ». Plus précisément on initialise $p = k$ et on part du dernier bit $a_{N-1}$.

si $a_{N-1} = 0$: $\quad r(a_0 a_1 \ldots a_{N-2} 0; p, N) = r(a_0 a_1 \ldots a_{N-2}; p, N-1)$

et $p$ reste inchangé ; $\hspace{12cm}$ (4-1)

$$\text{si } a_{N-1} = 1: \quad r(a_0 a_1 \ldots a_{N-2}1; p, N) = r(a_0 a_1 \ldots a_{N-2}, p-1; N-1) + \binom{N-1}{p}$$

et on décrémente $p : p \leftarrow p - 1$ ; $\hspace{6cm}$ (4-2)

De la même manière, on continue ensuite avec $a_{N-2}$, c'est à dire

$$\text{si } a_{N-2} = 0: \quad r(a_0 a_1 \ldots a_{N-3}0; p, N-1) = r(a_0 a_1 \ldots a_{N-3}; p, N-2)$$

et p reste inchangé ;

$$\text{si } a_{N-2} = 1: \quad r(a_0 a_1 \ldots a_{N-3}1; p, N-1) = r(a_0 a_1 \ldots a_{N-3}; p-1, N-2) + \binom{N-2}{p}$$

et on décrémente $p : p \leftarrow p - 1$ ; $\hspace{6cm}$ (4-3)

On continue ainsi de proche en proche jusqu'à ce que $p = 0$. Le mot de code est alors $C(i_1, i_2, \ldots, i_k) = \bar{r}$.

L'homme du métier comprendra qu'on obtient ainsi une valeur de code identique à celle donnée par le second membre de l'équation (3).

A titre d'exemple, le calcul du mot de code $C(i_1, i_2, \ldots, i_k)$ (plus précisément de la valeur entière $r\left(w_{i_1, i_2, \ldots, i_k}^N; k, N\right)$ ) pourra être effectué au moyen du pseudocode suivant :

**FUNCTION ListToRank (IND[ ], k, N)**


        ***Input* :**

- $N, \ 1 \leq N$.
- $k, \ k \leq N$.
- Liste de k indices par ordre croissant $0 \leq i_1 < i_2 < \ldots < i_k \leq N-1$
- $IND[0] = i_1; IND[1] = i_2; \ldots; \ IND[k-1] = i_k;$


        ***Output* :**

- $r$ rang de la séquence binaire de longueur $N$ et de poids $k$ telle que les positions des $k$ « 1 » dans la séquence binaire soient en $i_1, i_2, \ldots, i_k, \ 0 \leq r < BIN(N, k)$


        ***Procedure* :**


1) $r = 0$;
2) For$(i = k ; i > 1; i - -)$ {
    - $L = IND[i-1]$;
    - $r = r + BIN[L, i]$; }
3) $Return \ (r)$;

La méthode de diffusion à accès contrôlé décrit en relation avec les figures 4 et 5 peut être déclinée selon les schémas CS et SD décrits dans la partie introductive.

On rappelle que dans le schéma CS, le recouvrement des utilisateurs est réalisé par une famille préétablie de $N =$

$2^{n+1}$ - 1 sous-ensembles, chaque sous-ensemble étant un sous-arbre dont la racine est un nœud d'un arbre binaire $T$ de hauteur $n$. Les indices i des $N$ sous-ensembles $S_i = ST(v_i)$ sont ordonnés en numérotant les nœuds en partant de la racine et en progressant de niveau en niveau, chaque niveau étant successivement balayé, les nœuds d'un même niveau étant numérotés successivement. Cette numérotation garantit que l'indice d'un sous-ensemble dépend du niveau où se trouve le nœud auquel il est associé mais non de la hauteur de l'arbre $T$.

De manière similaire, dans le schéma SD, le recouvrement des utilisateurs est réalisé par une famille préétablie de $N = 2^{n+1}(n-1) + 2$ sous-ensembles, chaque sous-ensemble $SD_{i,j}$ étant une différence d'un sous-arbre majeur, $ST(v_i)$, et d'un sous-arbre mineur, $ST(v_j)$, la racine $v_j$ du sous-arbre mineur étant un nœud du sous-arbre majeur, $SD_{i,j} = ST(v_i) \setminus ST(v_j)$. Les couples d'indices $(i, j)$ caractérisant les sous-ensembles $SD_{i,j}$ sont ordonnés suivant un ordre qui consiste à visiter successivement les sous arbres mineurs $ST(v_j)$ suivant l'ordre précédent du schéma CS (c'est à dire par hauteur croissante) et pour chaque $ST(v_j)$ ainsi rencontré, à numéroter tous les $ST(v_i) \setminus ST(v_j)$ dont le nœud $v_i$ est ancêtre du nœud $(v_j)$. Avec une numérotation suivant cet ordre de parcours, on garantit que le numéro d'un sous-ensemble $SD_{i,j} = ST(v_i) \setminus ST(v_j)$ dépend de la hauteur effective où se situe les nœuds $v_j$ et $v_j$ mais pas de la hauteur totale de l'arbre T sélectionné.

Que ce soit dans le cas du schéma CS ou du schéma SD, le recouvrement des usagers autorisés ne fait généralement appel qu'à certains membres de la famille préétablie de sous-ensembles.

En ce qui concerne le schéma CS, si les nœuds $v_i$ des sous-ensembles $ST(v_i)$ utilisés pour couvrir l'ensemble des utilisateurs autorisés de la session courante s'avèrent tous situés à une hauteur inférieure à un seuil $n^* \leq n$, alors le code de la couverture courante est identique à celui qu'on aurait obtenu avec un arbre de hauteur $n^*$, ceci en raison de l'ordre choisi pour numéroter les nœuds $v_i$ par hauteur croissante.

De manière similaire, ceci est aussi valable en ce qui concerne le schéma SD, si les nœuds $v_j$ des sous-ensembles $ST(v_i)\setminus ST(v_j)$ utilisés pour couvrir l'ensemble des utilisateurs autorisés de la session courante s'avèrent tous situés à une hauteur inférieure au seuil $n^* \leq n$.

Par conséquent, les k-uplets d'indices pourront alors être codés en remplaçant $n$ par $n^*$ et $N$ par $N^* = 2^{n^*+1} - 1$ (dans le schéma CS) resp. $N^* = 2^{n^*+1}(n^*-1) + 2$ (dans le schéma SD), ce qui permettra de réduire encore davantage le champ d'index et donc la taille de l'entête.

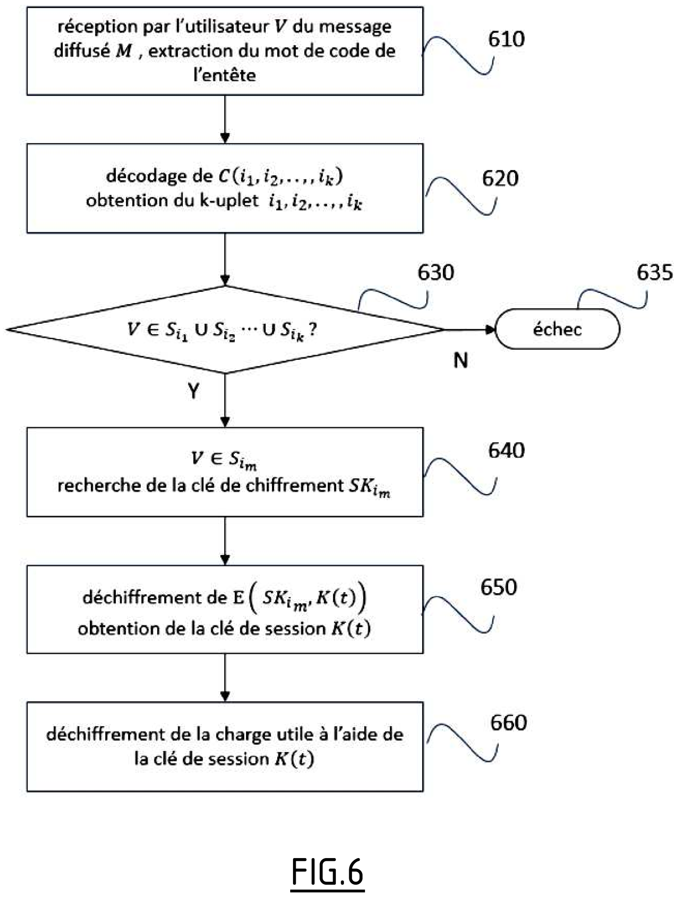

La figure 6 représente de manière schématique une méthode de réception d'un message diffusé par la méthode de diffusion à accès contrôlé de la Fig. 4.

On suppose que le message diffusé, M, est reçu par le récepteur d'un utilisateur $V$.

A l'étape 610, le récepteur de l'utilisateur en question extrait de l'entête du message, le mot de code $C(i_1, i_2,...,i_k)$ situé dans le champ d'index.

A l'étape 620, le récepteur décode $C(i_1, i_2,...,i_k)$ à l'aide d'une fonction de décodage décrite ci-après pour obtenir le $k$-uplet d'indices $i_1, i_2,...,i_k$ .

A l'étape 630, le récepteur détermine si l'utilisateur $V$ appartient à l'un des sous-ensembles $S_{i_1}, S_{i_2}, ...S_{i_k}$ formant le recouvrement.

Dans la négative, le récepteur n'est pas autorisé à déchiffrer le message et la réception du message échoue en 635. En revanche, s'il existe au moins un sous-ensemble $S_{i_m} \in \{S_{i_1}, S_{i_2}, ... S_{i_k}\}$ tel que $V \in S_{i_m}$, le récepteur recherche en mémoire, à l'étape 640, la clé de chiffrement correspondante $SK_{i_m}$.

En 650, le récepteur déchiffre le chiffré $E(SK_{i_m}, K(t))$ au moyen de la clé $SK_{i_m}$ pour obtenir la clé de session, $K(t)$.

En 660, le récepteur déchiffre la charge utile du message, $F(K(t), D)$, à l'aide de la clé de session et récupère les données en clair, $D$. Si $F$ est un chiffrement par flot, le déchiffrement F' pourra être identique à $F$.

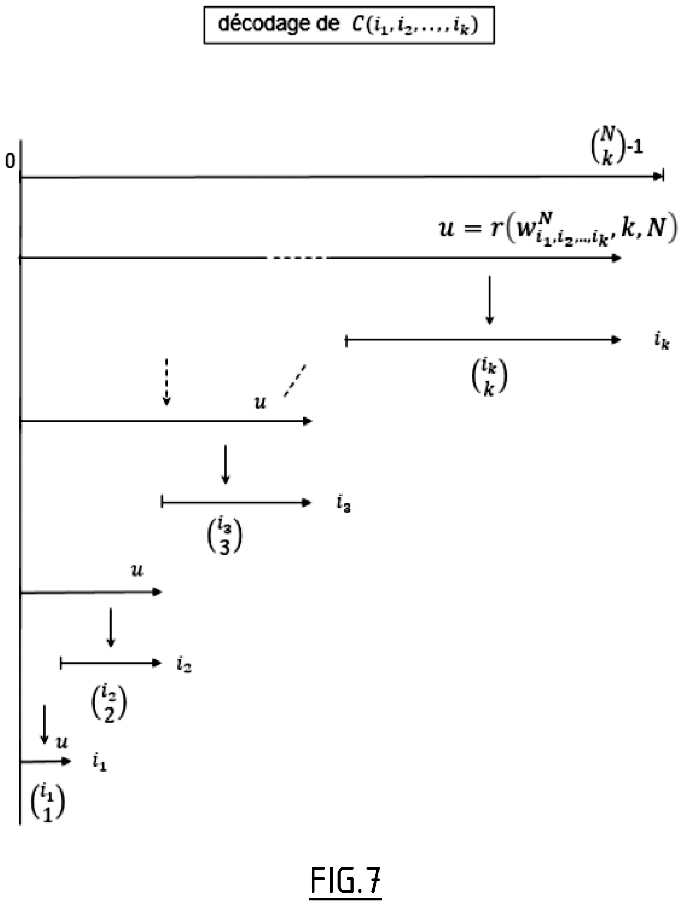

La figure 7 illustre un exemple de décodage de champ d'index pouvant être utilisé dans la méthode de réception de la Fig. 6.

La méthode de décodage du mot de code dans le champ d'index doit permettre de retrouver le k-uplet d'indices $i_1, i_2,..., i_k$, tels que $0 \leq i_1 < i_2 < ... < i_k \leq N - 1$ à partir du mot de code $C(i_1, i_2,..., i_k)$ de $\log_2 \binom{N}{k}$ bits représentant une valeur entière $r$ appartenant à l'intervalle $\left[0, \binom{N}{k}\right[$.

Dans une première étape, on initialise $u = r$ où $u$ est la longueur de l'intervalle restant à décoder, et $L = N - 1$ est un indice de position courante dans la séquence binaire

$$- \quad w^{N}_{i_1, i_2,.., i_k} = a_0 a_1 ... a_{N-1} .$$

On procède ensuite par itérations sur $p$, où $p$ est un compteur de positions à « 1 » restant à trouver : $p$ est initialisé par $p = k$.

On recherche dans un premier temps l'intervalle $\left[\binom{L}{p}, \binom{L+1}{p}\right[$ dans lequel se trouve la valeur u, en décrémentant successivement $L$ à partir de $N$ - 1 et ce, jusqu'à ce que la condition suivante soit réalisée :

$$\binom{L}{p} \leq u < \binom{L+1}{p} \tag{5}$$

Si l'on représente le triangle de Pascal avec $p$ en abscisses et $L$ en ordonnées, cela revient à balayer la colonne $p$ jusqu'à ce que la condition (5) soit réalisée.

Lorsque cette condition est réalisée, on en déduit qu'un « 1 » est en position $L$ dans la séquence binaire, c'est à dire $i_p = L$, et on retranche alors à u la largeur d'intervalle $\binom{i_p}{p}$ déjà décodée. La position courante dans la séquence binaire est décrémentée de 1 et le nombre de positions à « 1 » restant à trouver est décrémentée de 1.

On poursuit la recherche dans le nouvel intervalle $\left[\binom{L}{p}, \binom{L+1}{p}\right[$ et ainsi de suite jusqu'à ce que $p = 0$, c'est-à-dire que toutes les positions à « 1 » aient été trouvées.

A titre d'exemple, le k-uplet d'indices $i_1$, $i_2$,..., $i_k$, pourra être obtenu du mot de code $r = C(i_1, i_2,...,i_k)$ au moyen du programme suivant :

**PROCEDURE RankToList (IND[ ], r, k, N)**

**_Input_ :**

- $N, \ 1 \leq N.$

- $k, \ k \leq N.$

- $r, \ 0 \leq r < BIN(N,k)$

**_Output :_**

//Les $k$ positions $i_1, i_2, ..., i_K, \ 0 \leq i_1 < i_2 < \ ... < i_k \leq N-1$ sont stockées dans la table $IND[.] : \ IND[0] = i_1; IND[1] = i_2; \ ... \ ; \ IND[k-1] = i_k,$ de sorte que le rang de la séquence de longueur $N$ et de poids $k$ avec des « 1 » dans les positions $i_1, i_2, ..., i_K$ soit égal à $R$//

**_Procedure :_**

1) *L = N-1; u = r ;*
2) FOR $(p = k; p \geq 1; p - -)\,\{$
   - *C = BIN(L, p);*
   - WHILE $(u < C)\,\{\ L - -;\ C = BIN(L,p)\};$   *//après la boucle itérative,* $BIN(L,p) \leq u < BIN(L+1,p)//$
   - $IND[p-1] = L\ ;$

- $u = u - C;$

- $L = L - 1;$

$$\}$$

La procédure de décodage du mot de code décrite ci-dessus nécessite le calcul ou le stockage des coefficients binomiaux du triangle de Pascal pour des valeurs de $N$ qui peuvent souvent être élevées. Lorsque le récepteur dispose de ressources calculatoires et/ou en mémoire réduite, il pourra être avantageux d'utiliser la variante suivante.

Cette variante diffère de la précédente en ce qu'elle effectue une recherche par dichotomie au sein de chacune des p colonnes du triangle de Pascal $p = k, k - 1,..,1$ en évitant le calcul des coefficients binomiaux.

Plus précisément, la relation (5) peut encore s'écrire sous la forme :

$$V\, L(L - 1)(L - 2) \dots (L - p + 1) \le U = V\, p!\, u < V(L + 1)L(L - 1) \dots (L - p + 2)$$

$$(6)$$

où $V$ est un entier qui est sélectionné au fur et à mesure des itérations pour éviter toute division, et est initialisé à 1 au départ.

A chaque itération, pour une valeur p, la recherche de la valeur $L$ vérifiant (6) peut se faire par dichotomie, c'est-à-dire en comparant $U = V\,p!\,u$ avec la valeur de $V\,L(L - 1)(L - 2) \dots (L - p + 1)$ prise au milieu d'un intervalle d'exploration $[N_{inf}, N_{sup}[$ (la borne $N_{sup}$ étant donc exclue), soit $N_{mean} = (N_{inf} + N_{sup})/2$.

Si $U = V\,p!\,u < V\,N_{mean}(N_{mean} - 1) \dots (N_{mean} - p + 1)$ l'exploration se poursuit dans l'intervalle inférieur, autrement dit $N_{sup} \leftarrow N_{mean}$, et sinon elle se poursuit dans l'intervalle supérieur $N_{inf} \leftarrow N_{mean}$.

La recherche par dichotomie dans la colonne p du triangle de Pascal se poursuit tant que $N_{sup} - N_{inf} > 1$.

On initialise $u = r$ et $L = N - 1$ comme précédemment.

A la première itération, $p = k$, les bornes de l'intervalle d'exploration sont initialisées au moyen de $N_{sup} = L + 1 = N$ et $N_{inf} = p - 1 = k - 1$. En effet, la position $i_k$ peut varier entre $k - 1$ et $N - 1$ (la borne $N_{sup}$ est exclue), étant donné que $0 \leq i_1 < i_2 < \dots < i_k \leq N - 1$. A terme de la recherche par dichotomie, la valeur de $L$ vérifiant la condition (6) est obtenue et donc la position $i_k$ est déterminée par $i_k = L = N_{inf}$.

Comme dans la première variante, on doit mettre à jour u en lui retranchant la largeur d'intervalle déjà décodée,

$\binom{i_p}{p} = \binom{N_{inf}}{p}$, soit $u \leftarrow u - \binom{N_{inf}}{p}$. Toutefois, dans cette variante, c'est la valeur $U = V\,p!\,u$ intervenant dans l'expression (6) qu'il convient de mettre à jour, soit : $U \leftarrow U - V\,N_{mean}(N_{mean} - 1)(N_{mean} - 2) \dots (N_{mean} - p + 1)$.

A l'itération suivante, étant donné que p devient p - 1 on doit écrire la nouvelle valeur $U = V\,p!\,u$ sous la forme $U = V(p - 1)!\,u$, ce qui peut être réalisé sans division en multipliant simplement $V$ par $p$.

Le processus de décodage se poursuit à l'itération suivante en mettant à jour l'indice de position courante : $L \leftarrow N_{inf} - 1$ et le compteur de positions égale à « 1 » restant à trouver : $p \leftarrow p - 1$.

A titre d'exemple, le décodage utilisé du mot de code $C(i_1, i_2,...,i_k)$ (plus précisément de sa valeur entière $r$) pour obtenir le $k$-uplet d'indices $i_1, i_2,...,i_k$, pourra être obtenu à l'aide du programme suivant :

## PROCEDURE FAST_RankToList (IND[ ], r, k, N)

**Input :**

- $N, \ 1 \leq N.$

- $k, \ k \leq N.$

- $r, \ 0 \leq r < BIN(N, k)$

**Output :**

//Les $k$ positions $i_1, i_2, ..., i_K, \ 0 \leq i_1 < i_2 < \ ... < i_k \leq N - 1$ sont stockées dans la table

$IND[.] : \ IND[0] = i_1; IND[1] = i_2; \ ... \ ; \ IND[k - 1] = i_k,$ de sorte que le rang de la

séquence de longueur $N$ et de poids $k$ avec des « 1 » dans les positions $i_1, i_2, \ldots, i_K$ soit égal à $r$ //

**Procedure :**

- $U \leftarrow r$ ; $V \leftarrow 1$ ; $T \leftarrow 0$ // *U, V, F, T* sont des entiers longs
- $F \leftarrow k * (k-1) * (k-2) * \ldots * 2$ ;     // calcul de $k!$
- $U \leftarrow U * F$;
- $L \leftarrow N - 1$ ;
-   FOR $(p = k; p \geq 1; p--)$ {
-     $N_{inf} = p - 1$ ; $N_{sup} = L + 1$ ;

// avant la boucle while on a : $V\,p!\,BIN(N_{inf}, p) \leq U < V\,p!\,BIN(N_{sup}, p)$

-     while $((N_{sup} - N_{inf}) > 1)$ {

// recherche dichotomique pour obtenir $V\,p!\,BIN(N_{inf}, p) \leq U < Vp!\,BIN(N_{inf} + 1, p)$

-       $N_{mean} \leftarrow (N_{inf} + N_{sup})/2$ ;  // $N_{mean}$ entier simple
-       $T \leftarrow V * (N_{mean} - 1)(N_{mean} - 2) \ldots (N_{mean} - p + 1)$ ;  // *T* est un entier long
-       If $(U < T)$ $N_{sup} \leftarrow N_{mean}$ else $N_{inf} \leftarrow N_{mean}$ ;

// ajustement de la borne supérieure ou inférieure selon que $U$ est dans le demi-intervalle inférieur ou supérieur

$\}$ // fin du while

// après la boucle while on a : $V\,p!\,BIN(N_{inf}, p) \leq U < Vp!\,BIN(N_{inf} + 1, p)$

-       $U \leftarrow U - V * \prod_{0 \leq j < p}(N_{inf} - j)$ ;
-       $V \leftarrow p * V$;
-       $IND[p-1] = N_{inf}$;
-       $L = N_{inf} - 1$;

$\}$

**Revendications**

1.  Méthode de diffusion de données à accès contrôlé par recouvrement de sous-ensembles d'utilisateurs, lesdits sous-ensembles appartenant à une famille préétablie (*F*) de *N* > 1 sous-ensembles indexés selon une relation d'ordre, chaque sous-ensemble ($S_i$) de ladite famille étant associée à une clé de chiffrement ($SK_i$), dans laquelle un centre de diffusion de données détermine (410) les $k \leq N$ sous-ensembles ($S_{i_1}$, $S_{i_2}$, $\cdots$ , $S_{i_k}$) de ladite famille permettant un recouvrement ($S_{i_1} \cup S_{i_2} \cdots \cup S_{i_k}$) des utilisateurs autorisés à accéder à ces données et de ceux-ci seulement, ladite méthode étant **caractérisée en ce que** ledit centre de diffusion :

    - code (420) le *k*-uplet des indices ($i_1, i_2, \ldots, i_k$) respectifs des *k* sous-ensembles au moyen d'un mot de code ($C(i_1, i_2, \ldots, i_k)$) de $\log_2 \binom{N}{k}$ bits ;

- chiffre (430) une clé de session ($K(t)$) au moyen de chacune des clés de chiffrement ($SK_{i_1}$, $SK_{i_2}$, $\cdots$, $SK_{i_k}$) associées à ces $k$ sous-ensembles pour obtenir $k$ versions chiffrées de la clé de session ;
- construit (440) un entête de message en concaténant ledit mot de code et les $k$ versions chiffrées de la clé de session ;
- chiffre (450) un bloc de données ($D$) de ladite session au moyen de la clé de session pour obtenir une charge utile ;
- forme (460) un message ($M$) en concaténant l'entête et la charge utile puis diffuse (470) le message ainsi formé à l'ensemble des utilisateurs.

2. Méthode de diffusion de données à accès contrôlé selon la revendication 1, **caractérisée en ce que** le mot de code ($C(i_1,i_2,...,i_k)$) est l'expression binaire de la valeur entière $r = \sum_{p=1}^{k} \binom{i_p}{p}$, où $r \in \left[0, \binom{N}{k}\right[$ et $i_1, i_2,...,i_k$ sont les indices du k-uplet d'indices tels que $0 \leq i_1 < i_2 < ... < i_k \leq N - 1$.

3. Méthode de diffusion de données à accès contrôlé selon la revendication 2, **caractérisée en ce que** la valeur entière $r$ est calculée par récurrence à partir d'une séquence binaire ($w_{i_1,i_2,...,i_k}^{N}$) de longueur $N$ et de poids de Hamming $k$, nulle partout sauf aux bits de positions $i_1, i_2,...,i_k$, ces derniers prenant la valeur « 1 », la valeur $r$ étant le rang de la séquence binaire selon un ordre lexicographique.

4. Méthode de diffusion de données à accès contrôlé selon l'une des revendications précédentes, **caractérisée en ce que** le chiffrement de la clé de session est réalisé au moyen d'un chiffrement par bloc et que le chiffrement du bloc de données est réalisé au moyen d'un chiffrement par flot.

5. Méthode de diffusion de données à accès contrôlé selon l'une des revendications précédentes, **caractérisée en ce qu'**elle utilise un schéma arborescent pour représenter les sous-ensembles d'utilisateurs, les utilisateurs étant associés aux feuilles d'un arbre binaire, chaque sous-ensemble d'utilisateurs étant représenté par les feuilles d'un sous-arbre dont la racine appartient à cet arbre.

6. Méthode de diffusion de données à accès contrôlé selon l'une des revendications 1 à 4, **caractérisée en ce qu'**elle utilise un schéma arborescent pour représenter les sous-ensembles d'utilisateurs, les utilisateurs étant associés aux feuilles d'un arbre binaire, chaque sous-ensemble d'utilisateurs étant représenté par les feuilles d'un premier sous-arbre amputé d'un second sous-arbre dont la racine est un nœud du premier.

7. Méthode de réception d'un message diffusé (M) par un centre de diffusion de données selon la revendication 1, **caractérisée en ce qu'**un récepteur d'un utilisateur extrait (610) dudit message diffusé un entête contenant, d'une part, un mot de code (($C(i_1,i_2,...,i_k)$)) de $\log_2 \binom{N}{k}$ bits, codant un k-uplet donnant les indices respectifs de $k$ sous-ensembles ($S_{i_1}$, $S_{i_2}$, $\cdots$, $S_{i_k}$) recouvrant les utilisateurs autorisés à accéder aux données en clair du message, et seulement ceux-ci, parmi les $N$ sous-ensembles possibles d'une famille ($F$) préétablie de sous-ensembles, et, d'autre part, $k$ versions d'une clé de session chiffrée par chacune des clés de chiffrement ($SK_{i_1}$, $SK_{i_2}$, $\cdots$, $SK_{i_k}$) associées aux $k$ sous-ensembles ;

- ledit récepteur décodant (620) le mot de code à partir de la valeur entière ($r\left(w_{i_1,i_2,...,i_k}^{N}; k, N\right)$) correspondant au mot de code pour générer une séquence binaire ($w_{i_1,i_2,...,i_k}^{N} = a_0 a_1 ... a_{N-1}$) de $N$ bits, la position d'un bit égal à « 1 » dans la séquence donnant l'indice d'un sous-ensemble participant au recouvrement,
- le récepteur déterminant ensuite (630) si l'utilisateur appartient à l'un des sous-ensembles participant au recouvrement et, dans la négative, arrêtant le déchiffrement (635) et, dans l'affirmative,
- déchiffrant (640) la clé de session au moyen de clé de chiffrement associée ($SK_{i_m}$) à un sous-ensemble auquel il appartient ($S_{i_m}$), puis
- déchiffrant la charge utile du message au moyen de la clé de session ainsi obtenue (650).

8. Méthode de réception d'un message diffusé ($M$) selon la revendication 7, caractérisée en que la génération de la séquence binaire ($w_{i_1,i_2,...,i_k}^{N} = a_0 a_1 ... a_{N-1}$) est effectuée de manière récursive à partir de la valeur entière (

$\left(r\left(w_{i_1,i_2,...,i_k}^N;k,N\right)\right.$ ) représentant le mot de code en recherchant l'intervalle $\left[\binom{L}{p},\binom{L+1}{p}\right[$ dans lequel se trouve cette valeur entière, où $L$ est un indice de position courante dans la séquence binaire et $p$ est un compteur de positions de bit égal à « 1 » restant à trouver dans ladite séquence, et lorsque cette condition est réalisée, en déduisant qu'un bit égal à « 1 » est en position $L$ dans la séquence binaire, et en retranchant alors à la valeur entière représentant le code, la valeur entière $\binom{i_p}{p}$ déjà décodée, l'indice de position $L$ et le compteur $p$ étant alors décrémentés de 1.

**9.** Méthode de réception d'un message diffusé (M) selon la revendication 7, caractérisée en que la génération de la séquence binaire ( $w_{i_1,i_2,...,i_k}^N = a_0 a_1 ... a_{N-1}$ ) est effectuée de manière récursive à partir de la valeur entière $u = r\left(w_{i_1,i_2,...,i_k}^N;k,N\right)$ représentant le mot de code, en recherchant l'intervalle [V * L(L - 1)(L - 2) ... (L - p + 1), V * (L + 1)L(L - 1) ... (L - p + 2)[ dans lequel se trouve l'entier $U = V p! u$ où $p$ est un compteur de positions de bit égal à « 1 » restant à trouver dans ladite séquence, la recherche sur $L$ étant effectuée par dichotomie au sein d'un intervalle d'exploration [$N_{inf}$, $N_{sup}$[ dans la $p$ ième colonne du triangle de Pascal, et $V$ est un entier sélectionné au fur et à mesure des itérations pour éviter l'emploi de la division, et vaut 1 au départ.

**10.** Méthode de réception d'un message diffusé (*M*) selon la revendication 9, **caractérisée en ce que** la condition $U \in$ [V * L(L - 1)(L - 2) ... (L - p + 1), V * (L + 1)L(L - 1) ... (L - p + 2)[ est réalisée, on met à jour l'entier U en lui soustrayant $\prod_{0 \leq j < p}$ ($N_{inf}$ - j) et on met à jour V en le multipliant par p.

$$\underline{\text{FIG.1}}$$

FIG.2

FIG.3

détermination d'un recouvrement des utilisateurs autorisés à l'aide de de $k$ sous-ensembles parmi $N$: $S_{i_1} \cup S_{i_2} \cdots \cup S_{i_k}$ — 410

codage du k-uplet $i_1, i_2, \ldots, i_k$ par un mot de code $C(i_1, i_2, \ldots, i_k)$ de $\log_2 \binom{N}{k}$ bits — 420

génération de la clé de session $K(t)$ chiffrement avec $SK_{i_1}, SK_{i_2}, \ldots, SK_{i_k}$ — 430

construction de l'entête de message $\left[ \{i_1, i_2, \ldots, i_k\}, \mathrm{E}\left(SK_{i_1}, K(t)\right), \mathrm{E}\left(SK_{i_2}, K(t)\right), \ldots, \mathrm{E}\left(SK_{i_k}, K(t),\right) \right]$ — 440

chiffrement d'un bloc de données avec la clé de session $K(t)$ — 450

formation du message $M$ par concaténation de l'entête et de la charge utile — 460

diffusion à l'ensemble des utilisateurs — 470

$$\underline{\text{FIG.4}}$$

codage du $k$-uplet $(i_1, i_2, \ldots, i_k)$

$$0 \le i_1 < i_2 < i_3 \ldots < i_k \le N - 1$$

$w^N_{i_1, i_2, \ldots, i_k}:$ 0001000001000000001 ..... 0001000  $N$ bits

0 $\qquad\qquad\qquad\qquad\qquad\qquad\qquad\qquad\qquad\qquad\qquad\qquad\qquad$ $r\left(w^N_{i_1, i_2, \ldots, i_k}, k, N\right)$

$\binom{i_1}{1}$ $\qquad$ $\binom{i_2}{2}$ $\qquad$ $\binom{i_3}{3}$ $\qquad\qquad\qquad\qquad\qquad$ $\binom{i_k}{k}$

$$C(i_1, i_2, \ldots, i_k) = \overline{r\left(w^N_{i_1, i_2, \ldots, i_k}, k, N\right)}$$

## FIG.5

réception par l'utilisateur $V$ du message diffusé $M$ , extraction du mot de code de l'entête — 610

décodage de $C(i_1, i_2, \ldots, i_k)$ obtention du k-uplet $i_1, i_2, \ldots, i_k$ — 620

$V \in S_{i_1} \cup S_{i_2} \cdots \cup S_{i_k}$ ? — 630

échec — 635

N

Y

$V \in S_{i_m}$ recherche de la clé de chiffrement $SK_{i_m}$ — 640

déchiffrement de $\mathrm{E}\left(SK_{i_m}, K(t)\right)$ obtention de la clé de session $K(t)$ — 650

déchiffrement de la charge utile à l'aide de la clé de session $K(t)$ — 660

## FIG.6

décodage de $C(i_1, i_2, \ldots, i_k)$

FIG.7

**EP 4 765 726 A1**

Europäisches
Patentamt
European
Patent Office
Office européen
des brevets

# RAPPORT DE RECHERCHE EUROPEENNE

Numéro de la demande

EP 25 22 5929

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | PHAN DUONG HIEU ET AL: "Identity-Based Trace and Revoke Schemes", 16 octobre 2011 (2011-10-16), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 204 - 221, XP047379224, ISBN: 978-3-540-74549-5 | 1-8 | INV. H04L9/08 |
| A | * section 3.2 * | 9,10 | |
| Y | Mikael Sundström: "Time and Space Efficient Algorithms for Packet Classification and Forwarding", , 27 avril 2007 (2007-04-27), XP055210018, Extrait de l'Internet: URL:http://epubl.ltu.se/1402-1544/2007/15/ LTU-DT-0715-SE.pdf [extrait le 2015-08-28] | 1-8 | |
| A | * section 9 * | 9,10 | DOMAINES TECHNIQUES RECHERCHES (IPC) H04L |

Le présent rapport a été établi pour toutes les revendications

| Lieu de la recherche | Date d'achèvement de la recherche | Examinateur |
|---|---|---|
| Munich | 31 décembre 2025 | Billet, Olivier |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................................................
& : membre de la même famille, document correspondant

EPO FORM 1503 03.82 (P4C02)

## EP 4 765 726 A1

**Documents brevets cités dans la description**

- WO 02060116 A

**Littérature non-brevet citée dans la description**

- Revocation and tracing schemes for stateless receivers. **D. NAOR et al.** CRYPTO 2001. Springer Verlag, 2001, vol. 2139, 41-62